# EUROPEAN PATENT SPECIFICATION

(11) **EP 0 824 417 B1**
(45) Date of publication and mention of the grant of the patent: **24.10.2001**
(21) Application number: 96911102.0
(22) Date of filing: 17.04.1996
(51) Int. Cl.: B60R 16/02

(54) **BATTERY CLAMP AND VEHICLE COMPRISING SUCH BATTERY CLAMP**
BATTERIEKLEMME UND FAHRZEUG, DAS EINE DERARTIGE BATTERIEKLEMME UMFASST
COSSE DE BATTERIE ET VEHICULE COMPRENNANT UNE TELLE COSSE DE BATTERIE

(30) Priority: 19.04.1995 NL 1000175
(43) Date of publication of application: 25.02.1998
(73) Proprietor: Power-Motive B.V., 4731 SB Oudenbosch (NL)
(72) Inventor: WEIJERS, Johannes, Theodorus, Stefanus, Maria, NL-4813 AD Breda (NL); BOEKHOUT, Cornelis, Adrianus, Maria, NL-4901 ZS Oosterhout (NL)
(74) Representative: Smulders, Theodorus A.H.J., Ir.
(86) International application number: NL9600166
(87) International publication number: WO9633078

(56) References cited:
- EP-A- 0 214 532
- EP-A- 0 452 073
- EP-A- 0 632 558
- DE-A- 4 326 527
- DE-U- 9 012 327
- NL-A- 9 300 548
- US-A- 5 170 151

## Description

The invention relates to a battery clamp for connecting a cable to a battery pole. The invention also relates to a vehicle comprising such a battery clamp.

In the art, many applications are known of apparatus which are provided with electric voltage and current from a battery. A nonlimitative example of such an apparatus is, for instance, an electromotor. An important example of an application to which the invention particularly relates is a vehicle such as a motorcar, and for that reason, the invention will hereinafter be further explained especially in respect of this practical example.

A modern motorcar comprises a large number of electrical apparatus, such as lighting, heating, windscreen wiper, starting motor, etc. When the (combustion) engine of the motorcar is in operation, all those apparatus are fed from a dynamo driven by that engine; when that engine is at a standstill, all those apparatus are fed from a battery, also referred to as accumulator. For starting that engine, the motorcar is provided with an electric starting motor, fed from the battery; this may require a current of some hundreds of amperes. For that reason, a battery is able to supply a current of some hundreds of amperes for quite a long time.

It is generally known that in an electric circuit, a short circuit may occur caused by, for instance, a defect, wear, or an accident, as a result of which, for instance, a voltage cable which has come loose contacts a grounded part of the vehicle. In the event of a short circuit, the battery will deliver the maximum current producible in that circuit. The heat generated therewith may be so great that the electric cables melt, and fire may even be started (sparks). To avoid such a situation, it is known to incorporate fuses into the current-supply leads from the battery to power consumers, with a separate fuse being present per power consumer or group of power consumers. In the event of a short circuit in a fused power consumer, the fuse in question will become too hot and blow, whereby the electric connection between the battery and the power consumer is broken so that no current can flow any longer.

However, such fuses do not offer 100% protection against the problems mentioned. In the first place, all fuses are located in a fuse housing at some distance from the battery; if the short circuit occurs in the joint power supply leads from the battery to that fuse housing, these fuses will not come into action, allowing the excessive current to continue flowing freely. This may cause fatally dangerous situations, in particular when, as a consequence of a collision, a passenger of the vehicle in question cannot leave that vehicle.

Another problem is that it is in principle possible that a vehicle user himself builds in equipment in the vehicle and obtains the power from a point between the battery and the fuse housing, without utilizing a fuse. It will be understood that if, in the event of a defect of the apparatus, a short circuit then occurs, the short-circuit current caused thereby is not interrupted by a fuse, with its possible consequences.

US-A-4.958.084 describes a device as cited in the preamble of claim 1. This known device only functions as an anti-theft device for inhibiting a non-authorised attempt to start the engine of a car. However, this known device can not be used as safety precaution against short-circuiting.

Further, the known device is intended to be coupled between the battery and the battery cables. It comprises two fastening clamps for connecting the device on the two poles of the battery, and it comprises two pole-shaped terminals for connection with common cable clamps. This means that it is relatively easy to disconnect said device, and to connect the cables directly with the battery.

It is a first object of the present invention to provide a solution to the above problems. In particular, the object of the invention is to provide means which contribute to the safety in vehicles. More in particular, it is an object of the present invention to provide means which positively interrupt the current supply to the electric circuit of a vehicle upon the occurrence of an overload, but which undo that interruption again when the condition of overload has been removed.

Another problem to which the present invention intends to provide a solution concerns the problem of the use of a motorcar by unauthorized persons. It is generally known that in spite of the possible presence of alarm systems, unauthorized persons still prove to be able to start the engine of the vehicle and drive off therewith. The object of the invention is to prevent this by providing means which can at least prevent the use of a starting motor by unauthorized persons. More in particular, the object of the invention is to realize the above-mentioned objects in one and the same device, which is moreover secured against tinkering, as a result of which it is not easy to undo the safety provided by the device according to the invention.

The object of the invention is achieved by the subject-matter of claims 1 and 21; further advantageous embodiments thereof are defined in the dependent claims.

These and other aspects, characteristics and advantages of the present invention will be specified by the following description of preferred embodiments of a battery clamp according to the invention, with reference to the accompanying drawings, wherein:
Fig. 1 diagrammatically shows an electric equivalent-circuit diagram of a battery clamp according to the invention;
Fig. 2 is a diagrammatic top plan view, partly cutaway, of an embodiment of a battery clamp according to the invention;
Fig. 3 shows a block diagram of a guard circuit included in the battery clamp; and
Fig. 4 is a perspective view of a detail of a battery clamp.

In the Figures, a battery clamp according to the invention is generally designated by reference numeral 1. The battery clamp 1 is intended for mechanical attachment to and electric connection with a positive terminal of a battery or accumulator, not shown, and for that purpose comprises an electrically conductive fastening clamp member 10, preferably made of copper, brass or aluminum. For attachment to a conventional battery terminal having the shape of a truncated cone, the fastening clamp member 10 of the battery clamp 1 in the example shown comprises clamping shells 11, 12, each having, in top plan view, a substantially semicircular inner wall which, in downward direction, acquires a larger diameter.

The fastening clamp member 10 further comprises a body 13. Attached to a first end 14 of the body 13 are first ends 15, 16 of the clamping shells 11, 12. Attached to the other end 17, 18 of the clamping shells 11, 12 is a force member 19 for exerting an inwardly directed force on those other ends 17, 18 of the clamping shells 11, 12, as is known per se. An example of a suitable fastening clamp member 10 is described in Dutch patent application 93.00548.

However, it will be understood that instead of these clamping shells 11, 12, the fastening clamp member 10 may comprise an eye, fork, lip, pin or the like, in each case adapted, as far as shape and dimensions are concerned, to the connecting members of the battery in question.

Fitting the battery clamp 1 on a battery terminal simply takes place by placing the clamping shells 11, 12 over that battery terminal with a "loose" force member 19. By securing the force member 19, the clamping shells 11, 12 are firmly clamped on that battery terminal, whilst a mechanical and electric connection is ensured.

At a portion which is located at some distance from the first end 14, a guard circuit 100 is attached to the body 13. The guard circuit 100 has an input 101 which is electrically connected to the fastening clamp member 10, and an output 102 which is electrically connected to an electric cable 30. To that end, in the example shown, a cable lug 31 is provided, comprising a connecting lip 32 and a substantially tubular clamping connector 33. The clamping connector 33 is intended to receive the electric cable 30 and to be undetachably connected to that cable 30 through plastic deformation. The connecting lip 32 is connected to the guard circuit 100.

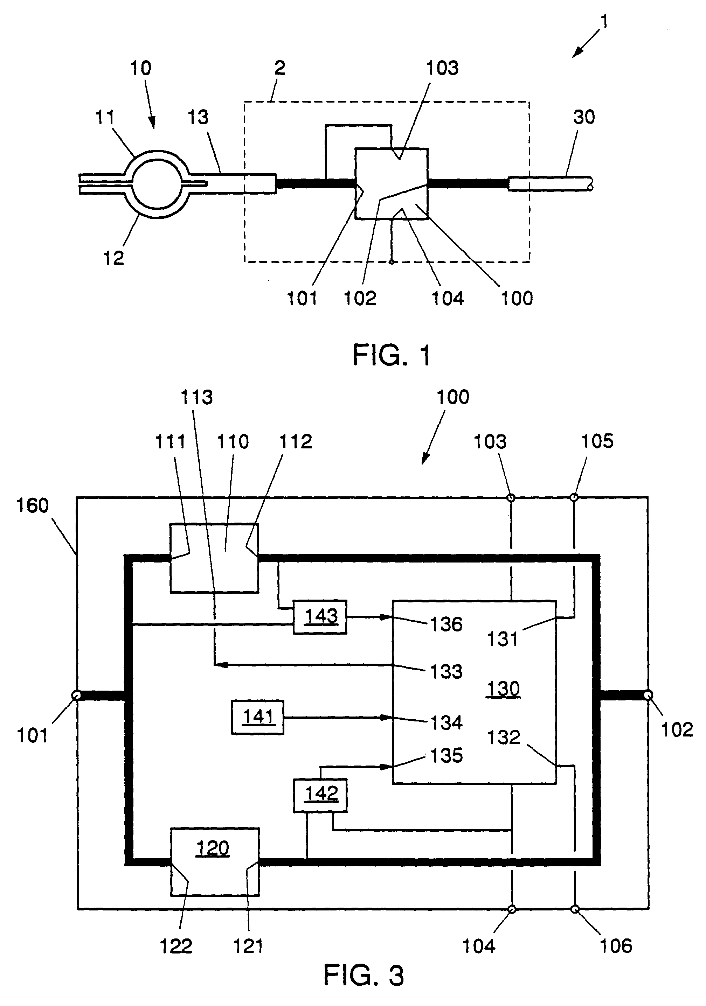

The body 13 of the fastening clamp member 10, and that guard circuit 100, are together cast into a waterproof, chemically resistant, impact-resistant plastic housing 2. Also cast into that plastic housing 2 is the connecting lip 32 of the cable lug 31. In this manner, the fastening clamp member 10, the guard circuit 100, the cable lug 31 and the plastic housing 2 are formed into an integral whole, and the guard circuit 100 is inseparably incorporated into the electric circuit from the fastening clamp member 10 to the power cable 30, as is clearly demonstrated in Fig. 1. On the outside, the battery clamp 1 presents itself as a cable lug having a clamping connector 33 for a cable and having a fastening clamp 10 for a battery pole.

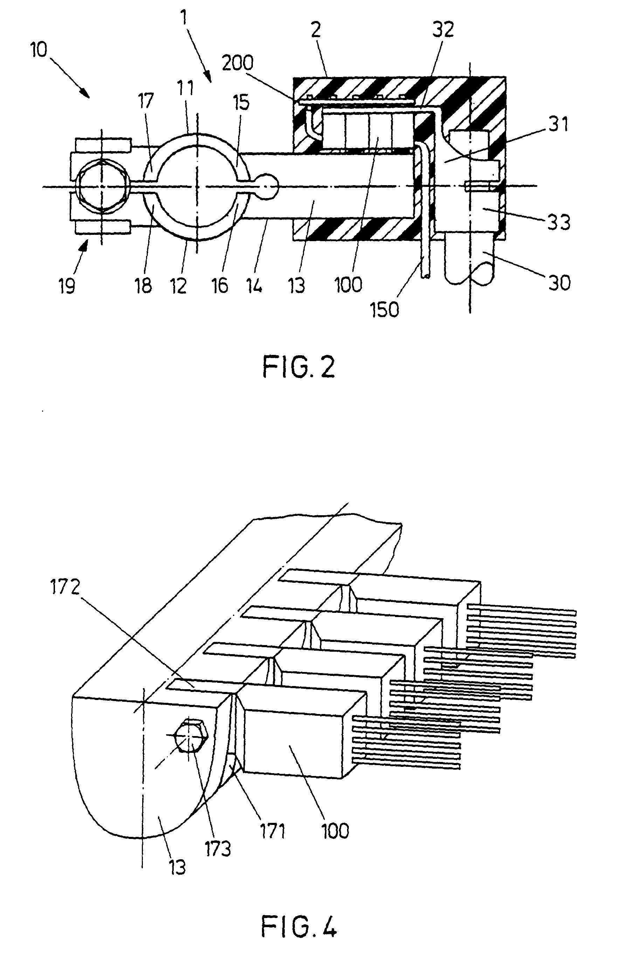

In the preferred embodiment shown in Fig. 2, not only the connecting lip 32 of the cable lug 31 is cast into the plastic housing 2, but the entire cable lug 31 with a starting portion of a cable 30 is cast into the plastic housing 2. Accordingly, the whole has the outward appearance of a cable 30 with a cast-on fastening clamp 10. This offers the advantage that the cable can only be used with the protective device 100 according to the invention integrated therein.

Presently, reference is made to Fig. 3, showing a block diagram of the guard circuit 100. The guard circuit 100 comprises a first switch 110, a second switch 120, and a control unit 130.

The first switch 110 has a current input 111, a current output 112, and a control input 113. The second switch 120 has a current input 121 and a current output 122. If so desired, the second switch 120 can also have a control input, but this control input is not used in the practical example described and is therefore not shown in Fig. 3. The control unit 130 has a data input 131, a data output 132 and a control output 133.

The guard circuit 100 further comprises an input connection 101, an output connection 102, a feed connection 103, a ground connection 104, a data input 105, and a data output 106. In a suitable embodiment, the whole is built up on a printed circuit board 200. If so desired, several guard circuits 100 can be mounted on that printed circuit board, which can then be connected in parallel, enabling the whole to process greater current strengths.

The first switch 110 has its current input 111 connected to the input connection 101 of the guard circuit 100, and has its output 112 connected to the output connection 102 of the guard circuit 100. During normal use, the first switch 110 is closed, with the first switch 110 offering a very slight resistance, typically in the order of 20 mΩ, to currents flowing from its current input 111 to its current output 112.

The second switch 120 has its input 121 connected to the output connection 102 of the guard circuit 100, and has its output 122 connected to the input connection 101 of the guard circuit 100. During normal use, the second switch 120 is open.

The switches 110 and 120 offer a great resistance to currents flowing from their outputs to their inputs. Accordingly, during normal use in a motorcar, with the clamp 10 being connected to a positive battery clamp and the cable 30 being connected, via one or several power-consuming apparatus, such as lamps, and via ground, to the negative battery clamp, with the input connection 101 hence being positive relative to the output connection 102, the current flows through the first switch 110. Only when the accumulator is being recharged from the dynamo belonging to the motorcar will a current flow from the output connection 102 to the input connection 101, which current will hence flow through the second switch 120. However, this flow will generally be much lower than the maximum current which the battery itself should be able to produce.

The first switch 110 is a controllable switch: its state (ON/OFF) can be controlled by means of a signal presented to the control input 113. In principle, the second switch 120, too, is a controllable switch having a control input, but this control input is not shown in Fig. 3, because it is not utilized in the application described. The control input 113 of the first switch 110 is connected to the control output 133 of the control unit 130. The control unit 130 is connected, via monitoring inputs 134-136 thereof, to monitoring members 141-143 for monitoring some operating parameters of the guard circuit 100. Some examples thereof will presently be discussed.

A first monitoring member 141 is adapted to measure the operating temperature of the device 100, and provides to a first monitoring input 134 of the control unit 130 a signal indicative of that operating temperature.

A second monitoring member 142 is adapted to measure the voltage difference between output 102 and ground 104, and provides to a second monitoring input 135 of the control unit 130 a signal indicative of that voltage difference.

A third monitoring member 143 is adapted to measure the voltage difference between input 101 and output 102, and provides to a third monitoring input 136 of the control unit 130 a signal indicative of that voltage difference.

The control unit 130 is adapted to switch off the switch 110 via its ouput 133 when the information received from the monitoring members is indicative of an overload and/or a short circuit, i.e. the current through the switch 110 is too high.

In a preferred embodiment, the control unit 130 is adapted to control, via its output 133, the transmission characteristic of the switch 110 so that the current through the switch is limited to a predetermined maximum. For that purpose, for the switch 110, the use of a FET is a suitable choice. Then, if the state with this maximum current continues too long, the guard circuit 100 may become too warm, whereupon the control unit 130 switches off the switch 110. If, after a passage of time, the temperature drops below a predetermined threshold, then the control unit 130 automatically switches on the switch 110 again. In this connection, it is observed that the guard circuit 100 preferably has its input 101 directly attached to the body 13, or is at least disposed as close thereto as possible, so that this body 13 also acts as cooling body of the guard circuit 100.

A guard circuit 100 such as the preferred embodiment described hereinabove acts completely automatically as a protection, integrated into the battery clamp, against overload, which automatically recovers when the overload is lifted. Hence, the user needs not look after it. However, for the functioning of the guard circuit 100, this device does require supply voltage. For that purpose, the feed connection 103 is connected to the input connection 101, and the ground connection 104 should be connected, via a separate lead 150, to a ground point or to the other terminal of the battery. If a sufficient voltage difference between the points 103 and 104 is lacking, for instance when the ground connection 104 is not connected to ground, then the switch 110 is in the OFF state. When that voltage difference then becomes sufficiently great again, the switch 110 is automatically switched ON again by the control unit 130. In a preferred embodiment, the feed connection 103 and the input connection 101 are present as a joint connecting point, rather than separate connecting points.

However, the guard circuit 100 offers even more possibilities to the user. Via the data input 105, it is possible to externally command the control unit 130 to switch OFF the switch 110. As long as this command on the input 105 is not undone, the control unit 130 and, accordingly, the switch 110 are blocked. Only when the control unit 130 is released via its input 105 can the switch 110 be switched ON again. This possibility can be used by coupling the guard circuit 100 to existing protection systems in a motorcar. By way of example, mention is here made of the possibility of switching off the board voltage of the vehicle after a collision, for which purpose the required detection data can be obtained from an airbag system. Further, mention is here made of the possibility of preventing the use (starting) of the vehicle by unauthorized persons, for which purpose the guard circuit 100 can be coupled to the starting lock and/or to an anti-theft system.

Via its data output 106, the guard circuit 100 further presents to the user a signal indicative of the actual operating state (status) of the device 100, for instance whether the short-circuit current protection has come into action.

In an embodiment wherein no use is made of such possibilities, these inputs and outputs have not been passed to the outside via a lead extending through the housing. In that case, only a ground-connecting lead 150 extends outwards, as is shown in Fig. 2.

Within the framework of the present invention, it is possible to build up the guard circuit 100 with discrete components, and for the switches 110 and 120, a relay could in principle be used. However, preferably, the guard circuit 100 is entirely built up as an integrated unit 160. An example of a guard circuit 100 built up as an integrated circuitry (IC) is commercially available from the manufacturer Siemens under the indication of PROFET® , of for instance the type numbers BTS 410, BTS 412, BTS 413, BTS 432, BTS 542. The last-mentioned version has a current-limiting level at 70 A. For obtaining a guard circuit 100 of a higher allowable current strength (for instance 300 A), it is possible to design a "heavier" integrated model, but it is also possible to switch several standard models in parallel, while it is advisable to have these several specimens thermally coupled to each other in a proper manner. This will inter alia be the case when these several specimens are mounted side by side on the body 13.

Fig. 4 shows a manner, found suitable, for attaching four guard circuits 100 to the body 13. In the body 13, four grooves 171 are provided, at right angles to the longitudinal direction thereof. In each groove 171 fits a cooling lip 172 of a guard circuit 100, which cooling lip 172 is electically conductive and is internally connected in the integrated circuitry with the input connection and with the feed connection. By means of a pin 173, the guard circuits 100 are secured relative to the body 13. This pin 173 can also be designed as a clamping screw for improving the thermal and galvanic contact between the cooling lip 172 and the body 13.

In this connection, it is observed that in the case of a motorcar, the maximum allowable current strength will in practice only be produced when the engine is started by means of the starting motor. The other current consumers will together consume less current. Hence, the battery clamp 1 is preferably of such design that the maximum current strength can only be produced for a limited, predetermined period.

A first manner to achieve this is based on the heating up of the guard circuit 100 when a high current passes through it. The heat development in the guard circuit 100 is greater according as the current is greater, and reaches a maximum value when that current is limited on the predetermined maximum value, controlled by the control unit 130. In an embodiment, the battery clamp 1 comprises means for establishing a predetermined degree of heat discharge from the guard circuit 100, for instance because the guard circuit 100 is mounted on a cooling body, which function is advantageously performed by the body 13. Through a suitable choice of those means, the speed at which the guard circuit 100 warms up can be set at a desired value. In combination with a suitably chosen value for a first predetermined temperature level at which the control unit 130 switches off the switch 110 on the basis of the signals received from the first monitoring member 141, for instance 150 °C, this switching off will take place automatically after a suitable period, which period is longer according as the current is lower, and which period reaches a predetermined minimum value in the case where the current limitation has come into action. That minimum period is preferably in the range of from about 15 sec to about 2 min, and more preferably in the range of from about 30 to about 60 sec.

A second manner is based on a time measurement, wherein efficient use is made of the information provided by the control unit 130 at its data output 132. If the current strength through the switch 110 becomes so great that it is limited to the above-mentioned maximum value, controlled by the control unit 130, then the control unit 130 provides at its data output 132 information indicative of that state. In an embodiment, the battery clamp 1 comprises time-measuring members, not shown for the sake of simplicity, of which an input is coupled to the data output 132 of the control unit 130 and of which an output is coupled to the control input 133 of the control unit 130, which time-measuring members are adapted to command the control unit 130, via its control input 133, to switch off the switch 110 after the passage of a predetermined time after this information is detected. Such time-measuring members can be mounted as loose components on the printed circuit board 200. However, it is also possible that such time-measuring members are integrated into the guard circuit 100, or even that such time-measuring members are integrated into the control unit 130.

It will be understood by a skilled person that it is possible to alter or modify the embodiment shown of the device according to the invention, without departing from the inventive concept or the scope of protection. For instance, for vehicles having an electric circuit where the positive voltage is grounded, it is possible that the battery clamp is intended for attachment to the negative pole of the battery.

It is also possible that the terminal of the battery has a different configuration, and that the fastening clamp member 10 has a configuration adapted thereto.

Further, it is possible that the battery clamp 1 comprises two or more output connectors 33 or output cables 30, connected via one and the same plastic housing 2 to one input clamp member 10. Those several outputs 33, 30 may be connected to an output connection 102 of the same guard circuit 100, but it is also possible that those several outputs 33, 30 are each connected, via a guard circuit 100 of their own, to the input clamp member 10. This last construction offers the advantage that in the event of a short circuit, not directly all power-consuming apparatus are switched off. In particular, it is advisable to provide an anti-theft alarm and/or an emergency circuit for an onboard computer and/or emergency lighting with a protected circuit of its own, whose maximum current value can be less than the maximum current value already mentioned. In such a situation, it is is advisable to thermally insulate the different guard circuits 100 for the different output cables relative to each other, at least to some degree, to avoid switching off of all guard circuits 100 when one of them gets overheated through short circuiting.

In principle, the position of the guard circuit 100 relative to the body 13 is not critical. In Figs. 2 and 4, it is shown that the guard circuit 100 may be placed against the side of the body 13; however, the guard circuit 100 may also be placed against an end face of the body 13.

The orientation of the cable 30 or connector 33 relative to the body 13 is not cricital either. In Fig. 2, it is shown that a longitudinal axis of the body 13 in mounted condition will substantially be at right angles to the body axis of the positive battery pole, and that a longitudinal axis of the cable 30 is substantially at right angles to that longitudinal axis of the body 13 and substantially at right angles to the body axis of that battery pole, and is hence substantially horizontally directed. The longitudinal axis of the cable 30 may also be aligned with the longitudinal axis of the body 13, or, conversely, be at right angles to that longitudinal axis but directect vertically so as to be parallel to the body axis of that battery pole. Yet, the cable 30 may also have any other orientation that is found suitable.

Further, the feed connection 103 may be internally connected to the input 101. In that case, the provision of an external feed connection 103 is not necessary.

## Claims

1. Battery clamp (1) for connecting a cable (30) to a pole of a battery, the device comprising:
an electrically conductive fastening damn member (10) having
means (11,12) for attachment of the fastening clamp member to said battery pole;
receiving means (33) for receiving said cable (30);
a guard circuit (100) coupled between a body of said fastening clamp member (10) and said receiving means (33) for interrupting an electrically conductive path between said battery pole and said cable, said guard circuit comprising:
- a controllable switch (110) having a current input (111), a current output (112), and a control input (113), the current input (111) being electroconductively connected to said fastening clamp member (10), the current output (112) being electroconductively connected to said receiving means (33), the switch (110) having a normally closed state wherein the switch (110) provides an electrically conductive path from its current input (111) to its current output (112);
- a control unit (130) having monitoring inputs (134-136) and a control output (133), said control output (133) being coupled to said control input (113) of the controllable switch (110);
- monitoring members (141-143) connected to said monitoring inputs (134-136) of the control unit (130); wherein said control unit (130) is adapted to control said switch (110) in response to signals received at its monitoring inputs (134-136) ;
**characterized in:**
**that** said control unit (130) is adapted to switch OFF said switch (110) in case the information received from said monitoring members (141-143) is indicative of an overload and/or a short circuit;
that said control unit (130) is adapted to switch ON said switch (110) again when the information received from said monitoring members (141-143) is indicating that said overload has ceased to exist; and that said guard circuit (100), at least a part of the body of the fastening clamp member (10), and a least a part of said receiving means (33), are cast into a plastic housing (2) such that the fastening clamp member (10), said receiving means (33), said guard circuit (100), and said housing (2) are formed as an integral whole.

2. A battery clamp according to claim 1, comprising current-limiting means.

3. A battery clamp according to claim 2, wherein the control unit (130) is adapted to control the switch (110) so that the current through the switch (110) does not exceed a predetermined maximum value.

4. A battery clamp according to any one of claims 1-3, wherein a monitoring input (134) of the control unit (130) is coupled to a monitoring member (141) adapted to measure an operating temperature of the guard circuit (100), and wherein the control unit (130) is adapted to switch the switch (110) OFF when said operating temperature exceeds a first predetermined temperature level.

5. A battery clamp according to claim 4, wherein means are provided for discharging heat from the guard circuit (100).

6. A battery clamp according to claim 5, wherein said heat-discharge means are provided in that the guard circuit (100) is attached so as to be in proper thermal contact with the body (13).

7. A battery clamp according to any one of claims 4-6, wherein the control unit (130) is adapted to switch the switch (110) ON again when said operating temperature drops again below a second predetermined temperature level lower than the first predetermined temperature level.

8. A battery clamp according to any one of the preceding claims, wherein a monitoring input (135) of the control unit (130) is coupled to a monitoring member (142) adapted to measure the voltage difference between the current output (112) of the switch (110) and a ground connection (104), and wherein the control unit (130) is adapted to switch the switch (110) OFF again when said voltage difference exceeds a predetermined voltage level.

9. A battery clamp according to any one of the preceding claims, wherein a monitoring input (136) of the control unit (130) is coupled to a monitoring member (143) adapted to measure the voltage difference between the current input (111) and the current output (112) of the switch (110), and wherein the control unit (130) is adapted to switch the switch (110) OFF when said voltage difference exceeds a predetermined voltage level.

10. A battery clamp according to any one of the preceding claims, wherein the guard circuit (100) comprises a second switch (120) of which a current input (121) is electroconductively connected to said receiving means (33), and of which a current output (122) is electroconductively connected to the fastening clamp member (10).

11. A battery clamp according to any one of the preceding claims, wherein the guard circuit (100), at least a part of the body (13) of the fastening clamp member (10), and at least a part (32) of said receiving means (33), are cast into a plastic housing (2).

12. A battery clamp according to claim 11, wherein an end of a cable (30) received in said receiving means (33) is also cast into the plastic housing.

13. A battery clamp according to any one of the preceding claims, wherein a ground connection (104) of the guard circuit (100) is provided, which is preferably connected to a connecting cable (150) of which one end is fixedly cast into the plastic housing (2).

14. A battery clamp according to any one of the preceding claims, wherein the control unit (130) comprises a data input (105) for receiving control signals, said data input preferably being connected to a connecting cable of which one end is fixedly cast into the plastic housing (2).

15. A battery clamp according to any one of the preceding claims, wherein the control unit (130) comprises a data output (106) for providing status information, said data output preferably being connected to a connecting cable of which one end is fixedly cast into the plastic housing (2).

16. A battery clamp according to any one of the preceding claims, comprising a second guard circuit of which an input is connected to the input of the first guard circuit and of which an output is connected to a second cable, separate from the first cable, wherein the second guard circuit and the first guard circuit are preferably thermally decoupled substantially relative to each other.

17. A battery clamp according to any one of claims 2-16, comprising means to ensure that the switch (110) is switched OFF at a predetermined time after the current-limiting means have come into action.

18. A battery clamp according to claim 17, wherein the control circuit (130) is adapted to control the switch (110) so that the current through the switch (110) does not exceed a predetermined maximum value; to measure the time passing from the moment when the current through the switch (110) reaches and maintains said predetermined maximum value; and to switch the switch (110) OFF when that time corresponds to said predetermined time.

19. A battery clamp according to claim 17,
wherein the control circuit (130) is adapted to control the switch (110) so that the current through the switch (110) does not exceed a predetermined maximum value;
wherein the control unit (130) comprises a data output (106) for providing status information and a data input (105) for receiving control signals;
wherein there is provided a time-measuring circuit having an input connected to said data output (106) and an output connected to said data input (105);
wherein the time-measuring circuit is adapted to start a timer in response to the reception of a signal indicating that the switch (110) is controlled by the control circuit (130) in a current-limiting mode, and to command the control circuit (130) to switch the switch (110) OFF when said timer reaches a time value corresponding to said predetermined time.

20. A battery clamp according to claim 19, wherein said time-measuring circuit is integrated into the guard circuit (100).

21. A vehicle comprising an accumulator and a number of power-consuming apparatus which are connected to said accumulator via a battery clamp according to any one of the preceding claims.

22. A vehicle according to claim 21, comprising fuses for individual or groups of said power-consuming apparatus, said fuses being designed as a guard circuit (100) comprising:
an input (101);
an output (102);
a controllable, preferably electronic, switch (110), of which a current input (111) is electroconductively connected to said input (101), and of which a current output (112) is electroconductively connected to said output (102);
a control unit (130) of which a control output (133) is coupled to a control input (113) of the switch (110);
monitoring members (141-143) connected to monitoring inputs (134-136) of the control unit (130);
wherein the control unit (130) is adapted to control the switch (110) in response to signals received at its monitoring inputs (134-136);
wherein each fuse designed as a guard circuit (100) comprises current-limiting means to limit the current through the switch (110) to a predetermined maximum value; and
wherein the sum of said predetermined maximum values of all said fuses is not greater than the predetermined maximum value of the current through the switch (110) of the battery clamp (1).

## Patentansprüche

1. Batterieklemme (1) zum Verbinden eines Kabels (30) mit einem Pol von einer Batterie, wobei die Vorrichtung aufweist:
ein elektrisch konduktives Befestigungsklemmenbauteil (10) mit Einrichtungen (11, 12) zur Anbringung des Befestigungsklemmenbauteils an dem Batteriepol;
einer Aufnahmeeinrichtung (33) zum Aufnehmen des Kabels (30) ;
eine Schutzschaltung (100), die zwischen dem Körper des Befestigungsklemmenbauteils (10) und der Aufnahmeeinrichtung (33) vorgesehen ist, um einen elektrisch konduktiven Pfad zwischen dem Batteriepol und dem Kabel zu unterbrechen, wobei die Schutzschaltung aufweist:
- einen steuerbaren Schalter (110) mit einem Stromeingang (111), einem Stromausgang (112) und einem Steuerungseingang (113), wobei der Stromeingang (111) elektrisch konduktiv mit dem Befestigungsklemmenbauteil (10) verbunden ist, wobei der Stromausgang (112) elektrisch konduktiv mit der Aufnahmeeinrichtung (32) verbunden ist, wobei der Schalter (110) einen normalerweise geschlossenen Zustand hat, in dem der Schalter (110) einen elektrisch konduktiven Pfad von seinem Stromeingang (111) zu seinem Stromausgang (112) bewirkt;
- eine Steuerungseinheit (130) mit Überwachungseingängen (134-136) und einem Steuerungsausgang (133), wobei der Steuerungsausgang (133) mit dem Steuerungseingang (113) des steuerbaren Schalters (110) verbunden ist;
- Überwachungsbauteile (141-143), die mit den Überwachungseingängen (134-136) der Steuerungseinheit (130) verbunden sind, wobei die Steuerungseinheit (130) dazu ausgestaltet ist, den Schalter (110) in Reaktion auf Signale zu steuern, die an seinen Überwachungseingängen (134-136) empfangen werden;
**dadurch gekennzeichnet,**
**daß** die Steuerungseinheit (130) dazu ausgestaltet ist, den Schalter (110) in dem Fall auszuschalten, in dem die von den Überwachungseinrichtungen (141-143) empfangenen Informationen eine Überlastung und/oder einen Kurzschluß angeben;
**daß** die Steuerungseinheit (130) dazu ausgestaltet ist, den Schalter (110) wieder einzuschalten, wenn die von den Überwachungsbauteilen (141-143) empfangenen Informationen angeben, daß die Überlastung nicht mehr vorhanden ist;
und **daß** die Schutzschaltung (100), zumindest ein Teil des Körpers des Befestigungsklemmenbauteils (10) und zumindest ein Teil der Aufnahmeeinrichtung (33) in einem Kunststoffgehäuse (2) eingegossen sind, so daß das Befestigungsklemmenbauteil (10), die Aufnahmeeinrichtung (33), die Schutzschaltung (100) und das Gehäuse (2) als ein integriertes Ganzes geformt sind.

2. Batterieklemme nach Anspruch 1, mit einer Strombegrenzungseinrichtung.

3. Batterieklemme nach Anspruch 2, bei der die Steuerungseinheit (130) dazu ausgestaltet ist, den Schalter (110) so zu steuern, daß der Strom durch den Schalter (110) einen bestimmten Maximalwert nicht übersteigt.

4. Batterieklemme nach einem der Ansprüche 1-3, bei der ein Überwachungseingang (134) der Steuerungseinheit (130) mit einem Überwachungsbauteil (142) gekoppelt ist, das dazu ausgestaltet ist, eine Betriebstemperatur der Schutzschaltung (100) zu messen, und bei der die Steuerungseinheit (130) dazu ausgestaltet ist, den Schalter (110) auszuschalten, wenn die Betriebstemperatur einen ersten vorbestimmten Temperaturwert übersteigt.

5. Batterieklemme nach Anspruch 4, bei der Einrichtungen vorgesehen sind, um Wärme von der Schutzschaltung (100) abzuleiten.

6. Batterieklemme nach Anspruch 5, bei der die Hitzeableitungseinrichtungen vorgesehen sind, daß die Schutzschaltung (100) so angebracht ist, um mit dem Körper (13) einen guten thermischen Kontakt zu haben.

7. Batterieklemme nach einem der Ansprüche 4-6, bei der die Steuerungseinheit (130) dazu ausgestaltet ist, den Schalter (110) wieder einzuschalten, wenn die Betriebstemperatur wieder unter einen zweiten vorbestimmten Temperaturwert sinkt, der kleiner als der erste vorbestimmte Temperaturwert ist.

8. Batterieklemme nach einem der vorhergehenden Ansprüche, bei der ein Überwachungseingang (135) der Steuerungseinheit (130) mit einem Überwachungsbauteil (142) gekoppelt ist, das dazu ausgestaltet ist, die Spannungsdifferenz zwischen dem Stromausgang (112) des Schalters (110) und einer Erdverbindung (104) zu messen, und bei der die Steuerungseinheit (130) dazu ausgestaltet ist, den Schalter (110) wieder auszuschalten, wenn die Spannungsdifferenz einen vorbestimmten Spannungswert übersteigt.

9. Batterieklemme nach einem der vorhergehenden Ansprüche, bei der ein Überwachungseingang (136) der Steuerungseinheit (130) mit einem Überwachungsbauteil (143) gekoppelt ist, das dazu ausgestaltet ist, die Spannungsdifferenz zwischen dem Stromeingang (111) und dem Stromausgang (112) des Schalters (110) zu messen, und bei der die Steuerungseinheit (130) dazu ausgestaltet ist, den Schalter (110) auszuschalten, wenn die Spannungsdifferenz einen vorbestimmten Spannungswert übersteigt.

10. Batterieklemme nach einem der vorhergehenden Ansprüche, bei der die Schutzschaltung (100) einen zweiten Schalter (120) aufweist, von dem ein Stromeingang (121) elektrisch konduktiv mit der Aufnahmeeinrichtung (33) verbunden ist, und von dem ein Stromausgang (122) elektrisch konduktiv mit dem Befestigungsklemmenbauteil (10) verbunden ist.

11. Batterieklemme nach einem der vorhergehenden Ansprüche, bei der die Schutzschaltung (100), zumindest ein Teil des Körpers (13) des Befestigungsklemmenbauteils (10) und zumindest ein Teil (32) der Aufnahmeeinrichtung (33) in einem Kunststoffgehäuse (2) eingegossen sind.

12. Batterieklemme nach Anspruch 11, bei der ein Ende von einem Kabel (30), das in der Aufnahmeeinrichtung (33) aufgenommen ist, ebenfalls in dem Kunststoffgehäuse eingegossen ist.

13. Batterieklemme nach einem der vorhergehenden Ansprüche, bei der die Schutzschaltung (100) mit einer Erdverbindung (104) versehen ist, die vorzugsweise mit einem Verbindungskabel (150) verbunden ist, von dem ein Ende fest in dem Kunststoffgehäuse (2) eingegossen ist.

14. Batterieklemme nach einem der vorhergehenden Ansprüche, bei der die Steuerungseinheit (130) einen Dateneingang (105) zum Empfangen von Steuerungssignalen aufweist, wobei der Dateneingang vorzugsweise mit einem Verbindungskabel verbunden ist, von dem ein Ende fest in dem Kunststoffgehäuse (2) eingegossen ist.

15. Batterieklemme nach einem der vorhergehenden Ansprüche, bei der die Steuerungseinheit (130) einen Datenausgang (106) aufweist, um Statusinformationen zur Verfügung zu stellen, wobei der Datenausgang vorzugsweise mit einem Verbindungskabel verbunden ist, von dem ein Ende fest in dem Kunststoffgehäuse (2) eingegossen ist.

16. Batterieklemme nach einem der vorhergehenden Ansprüche, mit einer zweiten schutzschaltung, von der ein Eingang mit dem Eingang der ersten Schutzschaltung verbunden ist, und von der ein Ausgang mit einem zweiten Kabel verbunden ist, das von dem ersten Kabel getrennt ist, wobei die zweite schutzschaltung und die erste Schutzschaltung vorzugsweise relativ zueinander im wesentlichen thermisch entkoppelt sind.

17. Batterieklemme nach einem der Ansprüche 2-16, mit einer Einrichtung, um zu gewährleisten, daß der Schalter (110) innerhalb einer vorbestimmten Zeit nach Aktivierung der Strombegrenzungseinrichtung ausgeschaltet wird.

18. Batterieklemme nach Anspruch 17, bei der die Steuerungsschaltung (130) dazu ausgestaltet ist, um den Schalter (110) so zu steuern, daß der Strom durch den Schalter (110) einen vorbestimmten Maximalwert nicht übersteigt, um die Zeit zu messen, die von dem Augenblick an vergeht, an dem der Strom durch den Schalter (110) den vorbestimmten Maximalwert erreicht und beibehält, und um den Schalter (110) auszuschalten, wenn diese zeit der vorbestimmten Zeit entspricht.

19. Batterieklemme nach Anspruch 17,
bei der die Steuerungsschaltung (130) dazu ausgestaltet ist, den Schalter (110) so zu steuern, daß der Strom durch den Schalter (110) einen vorbestimmten Maximalwert nicht übersteigt;
bei der die Steuerungseinheit (130) eine Datenausgang (106), um Statusinformationen zur Verfügung zu stellen, und einen Dateneingang (105) aufweist, um Steuerungssignale zu empfangen;
bei der eine Zeitmeßschaltung vorgesehen ist, die einen Eingang, der mit dem Datenausgang (106) verbunden ist, und einen Ausgang hat, der mit dem Dateneingang (105) verbunden ist;
bei der die Zeitmeßschaltung dazu ausgestaltet ist, um einen Zeitgeber in Reaktion auf das Empfangen eines Signals zu starten, das angibt, daß der Schalter (110) durch die Steuerungsschaltung (130) in einem Strombegrenzungsmodus gesteuert wird, und um die Steuerungsschaltung (130) anzuweisen, den Schalter (110) auszuschalten, wenn der Zeitgeber einen Zeitwert erreicht, der der vorbestimmten. Zeit entspricht.

20. Batterieklemme nach Anspruch 19, bei der die Zeitmeßschaltung in die Schutzschaltung (100) integriert ist.

21. Fahrzeug, mit einer Batterie und einer Anzahl von Strom verbrauchenden Geräten, die mit der Batterie über eine Batterieklemme nach einem der vorhergehenden Ansprüche verbunden sind.

22. Fahrzeug nach Anspruch 21, mit Sicherungen für einzelne oder für Gruppen der Strom verbrauchenden Geräte, wobei die Sicherungen als eine Schutzschaltung (100) ausgestaltet sind, mit:
einem Eingang (101);
einem Ausgang (102);
einem steuerbaren, vorzugsweise elektronischen Schalter (110), von dem ein Stromeingang (111) elektrisch konduktiv mit dem Eingang (101) verbunden ist, und von dem ein Stromausgang (112) elektrisch konduktiv mit dem Ausgang (102) verbunden ist;
einer Steuerungseinheit (130), von der ein Steuerungsausgang (133) mit einem Steuerungseingang (113) des Schalters (110) gekoppelt ist;
Überwachungsbauteilen (141-143), die mit Überwachungseingängen (134-136) der Steuerungseinheit (130) verbunden sind;
wobei die Steuerungseinheit (130) dazu ausgestaltet ist, den Schalter (110) in Reaktion auf Signale zu steuern, die an ihren Überwachungseingängen (134-136) empfangen werden;
wobei jede Sicherung, die als eine Schutzschaltung (100) ausgebildet ist, eine Strombegrenzungseinrichtung aufweist, um den Strom durch den Schalter (110) auf einenvorbestimmten Maximalwert zu begrenzen; und
wobei die Summe der vorbestimmten Maximalwerte von allen Sicherungen nicht größer als der vorbestimmte Maximalwert von dem Strom durch den Schalter (110) der Batterieklemme (1) ist.

## Revendications

1. Cosse de batterie (1) pour raccorder un câble (30) à un pôle d'une batterie, le dispositif comprenant :
un clip de fixation (10) électroconducteur doté de moyens (11, 12) pour son raccordement audit pôle de batterie ;
des moyens récepteurs (33) pour recevoir ledit câble (30) ;
un circuit de garde (100) inséré entre un corps dudit clip de fixation (10) et lesdits moyens récepteurs (33) pour interrompre une connexion électrique entre ledit pôle de batterie et ledit câble, ledit circuit de garde comprenant :
- un interrupteur commandable (110) ayant une entrée de courant (111), une sortie de courant (112), et une entrée de commande (113), l'entrée de courant (111) étant raccordée de manière électroconductrice audit clip de fixation (10), la sortie de courant (112) étant raccordée de manière électroconductrice auxdits moyens récepteurs (33), l'interrupteur (110) ayant un état normalement fermé dans lequel il établit une connexion électrique entre son entrée de courant (111) et sa sortie de courant (112) ;
- une unité de commande (130) ayant des entrées de contrôle (134-136) et une sortie de commande (133), ladite sortie de commande (133) étant couplée à ladite entrée de commande (113) de l'interrupteur commandable (110) ;
- des moyens de contrôle (141-143) reliés auxdites entrées de contrôle (134-136) de l'unité de commande (130) ;
ladite unité de commande (130) étant apte à commander ledit interrupteur (110) en réponse aux signaux reçus par ses entrées de contrôle (134-136) ;
**caractérisée en ce que**
ladite unité de commande (130) est apte à ouvrir ledit interrupteur (110) dans le cas où l'information reçue desdits éléments de contrôle (141-143) révèle l'existence d'une surcharge et/ou d'un court-circuit ; **en ce que**
ladite unité de commande (30) est apte à refermer ledit interrupteur (110) quand l'information reçue desdits éléments de contrôle (141-143) indique que ladite surchauffe a cessé ; et **en ce que**
ledit circuit de garde (100), au moins une partie du corps du clip de fixation (10) et au moins une partie desdits moyens récepteurs (33) sont enrobés dans un boîtier plastique (2) de manière que le clip de fixation (10), lesdits moyens récepteurs (33), ledit circuit de garde (100) et ledit boîtier (2) forment un ensemble monobloc.

2. Cosse de batterie selon la revendication 1, comprenant un moyen limiteur de courant.

3. Cosse de batterie selon la revendication 2, **caractérisée en ce que** l'unité de commande (130) est apte à commander l'interrupteur (110) de façon que le courant traversant l'interrupteur (110) n'excède pas une valeur maximale prédéterminée.

4. Cosse de batterie selon l'une quelconque des revendications 1 à 3, **caractérisée en ce qu'**une entrée de contrôle (134) de l'unité de commande (130) est couplée à un élément de contrôle (141) apte à mesurer une température de service du circuit de garde (100), et **en ce que** l'unité de commande (130) est apte à ouvrir l'interrupteur (110) lorsque ladite température de service excède un premier niveau de température prédéterminé.

5. Cosse de batterie selon la revendication 4, **caractérisée ce que** des moyens sont prévus pour dissiper la chaleur du circuit de garde (100).

6. Cosse de batterie selon la revendication 5, **caractérisée en ce que** lesdits moyens de dissipation de chaleur consistent en une connexion du circuit de garde (100) assurant un contact thermique correct avec le corps (13).

7. Cosse de batterie selon l'une quelconque des revendications 4 à 6, **caractérisée en ce que** l'unité de commande (130) est apte à refermer l'interrupteur (110) lorsque ladite température de service tombe au-dessous d'un second niveau de température prédéterminé, inférieur au premier niveau de température prédéterminé.

8. Cosse de batterie selon l'une quelconque des revendications précédentes, **caractérisée en ce qu'**une entrée de contrôle (135) de l'unité de commande (130) est couplée à un élément de contrôle (142) apte à mesurer la différence de potentiel entre la sortie de courant (112) de l'interrupteur (110) et un raccordement à la masse (104), et **en ce que** l'unité de commande (130) est apte à rouvrir l'interrupteur (110) lorsque ladite différence de potentiel excède un niveau prédéterminé.

9. Cosse de batterie selon l'une quelconque des revendications précédentes, **caractérisée en ce que** l'entrée de contrôle (136) de l'unité de commande (130) est couplée à un élément de contrôle (143) apte à mesurer la différence de potentiel entre l'entrée de courant (111) et la sortie de courant (112) de l'interrupteur (110), et **en ce que** l'unité de commande (130) est apte à rouvrir l'interrupteur (110) lorsque ladite différence de potentiel excède un niveau prédéterminé.

10. Cosse de batterie selon l'une quelconque des revendications précédentes, **caractérisée en ce que** le circuit de garde (100) comprend un interrupteur (120) dont une entrée de courant (121) est reliée de manière électroconductrice auxdits moyens récepteurs (33), et dont une sortie de courant (122) est reliée de manière électroconductrice au clip de fixation (10).

11. Cosse de batterie selon l'une quelconque des revendications précédentes, **caractérisée en ce que** le circuit de garde (100), au moins une partie du corps (13) du clip de fixation (10) et au moins une partie (32) desdits moyens récepteurs (33) sont enrobés dans un boîtier plastique (2).

12. Cosse de batterie selon la revendication 11, **caractérisée en ce qu'**une extrémité d'un câble (30) reçue dans lesdits moyens récepteurs (33) est également enrobée dans le boîtier plastique.

13. Cosse de batterie selon l'une quelconque des revendications précédentes, **caractérisée en ce qu'**il est prévu un raccordement à la masse (104) du circuit de garde (100), qui est de préférence raccordé à un câble de connexion (150) dont une extrémité est enrobée fixement dans le boîtier plastique (2).

14. Cosse de batterie selon l'une quelconque des revendications précédentes, **caractérisée en ce que** l'unité de commande (130) comprend une entrée de données (105) pour recevoir des signaux de commande, ladite entrée de données étant de préférence raccordée à un câble de connexion dont une extrémité est enrobée fixement dans le boîtier plastique (2).

15. Cosse de batterie selon l'une quelconque des revendications précédentes, **caractérisée en ce que** l'unité de commande (130) comprend une sortie de données (106) pour délivrer une information d'état, ladite sortie de donnée étant de préférence raccordée à un câble de raccordement dont une extrémité est enrobée fixement dans le boîtier plastique (2).

16. Cosse de batterie selon l'une quelconque des revendications précédentes, comprenant un second circuit de garde dont une entrée est raccordée à l'entrée du premier circuit de garde et dont une sortie est reliée à un second câble, distinct du premier câble, **caractérisée en ce que** le second circuit de garde et le premier circuit de câble sont de préférence sensiblement découplés thermiquement l'un de l'autre.

17. Cosse de batterie selon l'une quelconque des revendications 2 à 16, comprenant des moyens assurant que l'interrupteur (110) est fermé à l'issue d'un laps de temps prédéterminé après mise en fonction des moyens limiteurs de courant.

18. Cosse de batterie selon la revendication 17, **caractérisée en ce que** le circuit de commande (130) est apte à commander l'interrupteur (110) de façon que le courant traversant l'interrupteur (110) n'excède pas une valeur maximale prédéterminée ; à mesurer le temps écoulé à partir du moment où le courant traversant l'interrupteur (110) atteint et se maintient à ladite valeur maximale prédéterminée ; et à rouvrir l'interrupteur (110) quand ce temps correspond audit temps prédéterminé.

19. Cosse de batterie selon la revendication 17, **caractérisée en ce que** le circuit de commande (130) est apte à commander l'interrupteur (110) de façon que le courant traversant l'interrupteur (110) n'excède pas une valeur maximale prédéterminée ;
**en ce que** l'unité de commande (130) comprend une sortie de données (106) pour délivrer une information d'état et une entrée de données (105) pour recevoir des signaux de commande ;
**en ce qu'**il est prévu un circuit de mesure du temps ayant une entrée reliée à ladite sortie de données (106) et une sortie reliée à ladite entrée de données (105) ;
**en ce que** le circuit de mesure du temps est apte à déclencher une minuterie en réponse à la réception d'un signal indiquant que l'interrupteur (110) est commandé par le circuit de commande (130) dans un mode de limitation du courant, et à commander au circuit de commande (130) d'ouvrir l'interrupteur (110) quand ladite minuterie atteint une valeur de temps correspondant audit temps prédéterminé.

20. Cosse de batterie selon la revendication 19, **caractérisée en ce que** ledit circuit de mesure du temps est intégré au circuit de garde (100).

21. Véhicule comprenant un accumulateur et un certain nombre d'appareils consommateurs de courant qui sont reliés audit accumulateur par une cosse de batterie selon l'une quelconque des revendications précédentes.

22. Véhicule selon la revendication 21, comprenant des fusibles pour chacun desdits appareils consommateurs d'électricité ou pour des groupes desdits appareils consommateurs d'électricité, lesdits fusibles étant conçus sous la forme d'un circuit de garde (100) comprenant :
une entrée (101) ;
une sortie (102) ;
un interrupteur commandable (110), de préférence électronique, dont une entrée de courant (111) est reliée de manière électroconductrice à ladite entrée (101), et dont une sortie de courant (112) est reliée de manière électroconductrice à ladite sortie (102) ;
une unité de commande (130) dont une sortie de commande (133) est couplée à une entrée de commande (113) de l'interrupteur (110) ;
des éléments de contrôle (141-143) reliés à des entrées de contrôle (134-136) de l'unité de commande (130) ;
l'unité de commande (130) étant apte à commander l'interrupteur (110) en réponse aux signaux reçus par ses entrées de contrôle (134-136) ;
chaque fusible conçu sous la forme d'un circuit de garde (100) comprenant des moyens limiteurs de courant pour limiter le courant traversant l'interrupteur (110) à une valeur maximale prédéterminée ; et
la somme desdites valeurs maximales prédéterminées de tous lesdits fusibles n'étant pas supérieure à la valeur maximale prédéterminée du courant traversant l'interrupteur (110) de la cosse de batterie (1).
